# EUROPÄISCHE PATENTSCHRIFT

(11) **EP 0 750 552 B1**
(45) Veröffentlichungstag und Bekanntmachung des Hinweises auf die Patenterteilung: **03.06.1998**
(21) Anmeldenummer: 95912216.9
(22) Anmeldetag: 07.03.1995
(51) Int. Cl.: B60K 23/02, F16H 61/12

(54) **Getriebe mit Notfahrteinrichtung**
Transmission with limp-home function
Transmission avec mode dégradé

(30) Priorität: 12.03.1994 DE 4408472
(43) Veröffentlichungstag der Anmeldung: 02.01.1997
(73) Patentinhaber: ZF FRIEDRICHSHAFEN Aktiengesellschaft, 88038 Friedrichshafen (DE)
(72) Erfinder: GEBHARD, Wolfgang, D-88048 Friedrichshafen (DE); HEILIG, Eduard, D-88048 Friedrichshafen (DE)
(86) Internationale Anmeldenummer: EP9500835
(87) Internationale Veröffentlichungsnummer: WO9525021

(56) Entgegenhaltungen:
- EP-A- 0 090 945
- DE-A- 3 237 723
- DE-A- 4 305 763
- US-A- 4 195 716

## Beschreibung

Die Erfindung betrifft eine Antriebsvorrichtung, insbesondere zum Antrieb der Räder eines Kraftfahrzeuges, mit einem Antrieb und einem nachgeschalteten mechanischen Getriebe und zwei hydraulisch schaltbaren Reibungskupplungen bzw. Reibungsbremsen, über die der Antrieb mit dem Getriebe verbindbar ist und die die Funktion einer Feststellbremse erfüllen.

Es ist bekannt, bei Lastschaltgetrieben, wie sie in Nutzfahrzeugen, wie beispielsweise Radbaggern und Radladern, Verwendung finden, eine Hilfslöseeinrichtung vorzusehen, durch die der Antriebsstrang des Nutzfahrzeuges unterbrochen und somit ein liegengebliebenes Fahrzeug abgeschleppt werden kann.

Aus der DE-A-43 05 763 ist eine Antriebsvorrichtung mit einem Hydromotor und einem nachgeschalteten mechanischen Getriebe bekannt, welches eine mechanisch betätigte Hilfslöseeinrichtung aufweist. Bei der in der genannten Druckschrift offenbarten Antriebsvorrichtung kann die Reibungskupplung über eine mechanische Einrichtung für den Schleppbetrieb in der geöffneten Position verriegelt werden, so daß das Fahrzeug anschließend problemlos abgeschleppt werden kann.

Ein gattungsgemäßes Getriebe ist aus der WO-A-90/12227 bekannt.

Nachteilig ist jedoch, daß die Trennung des Antriebs-Stranges mechanisch durchgeführt wird, so daß diese Lösung aufgrund der Vielzahl der benötigten Einzelteile sehr aufwendig und somit teuer ist.

Der vorliegenden Erfindung liegt daher die Aufgabe zugrunde, eine Antriebsvorrichtung vorzusehen, mit der ein Fahrzeug im liegengebliebenen Zustand problemlos abgeschleppt werden kann und die kostengünstig ist.

Erfindungsgemäß wird diese Aufgabe dadurch gelöst, daß die Reibungskupplungen bzw. Reibungsbremsen über Steuerdruckleitungen mit einer Hilfslöseeinrichtung verbunden sind, die einen verstellbaren Speicherkolben und damit zusammenarbeitende Schaltkolben aufweist, wobei bei Betätigung des Speicherkolbens über die Schaltkolben das Volumen des Speicherkolbens über die Steuerdruckleitungen den Reibungskupplungen im Sinne einer Trennung zuführbar ist.

Durch das Vorsehen einer hydraulischen Hilfslöseeinrichtung mit einem verstellbaren Speicherkolben und damit zusammenarbeitenden Schaltkolben können mechanische Bauteile weitgehend vermieden werden, so daß die erfindungsgemäße Antriebsvorrichtung kostengünstig hergestellt und montiert werden kann.

Um zu vermeiden, daß der Steuerdruck des Getriebes des Fahrzeuges auf die hydraulische Hilfslöseeinrichtung einwirken kann, wird eine automatische Abdichtung bei Betätigung der hydraulischen Hilfslöseeinrichtung vorgenommen, so daß eine sichere und einwandfreie Funktion der Antriebsvorrichtung gewährleistet ist.

Die Dichtungen können hierbei direkt auf den Schaltkolben vorgesehen sein.

In vorteilhafter Weise kann vorgesehen sein, daß die Hilfslöseeinrichtung mit einem abgeschlossenen Ölvolumen versehen ist, das im normalen Fahrzeugbetrieb drucklos gehalten ist.

Da die Hilfslöseeinrichtung, hydraulisch gesehen, ein in sich abgeschlossenes System darstellt, können die für die Hilfslöseeinrichtung benötigten Hydraulikbauteile so dimensioniert werden, wie dies zum Betätigen der Hilfslöseeinrichtung notwendig ist, d. h. Überdimensionierungen der einzelnen Bauteile können vermieden und somit auch die Hilfslöseeinrichtung kostengünstig hergestellt werden.

Da die Hilfslöseeinrichtung im normalen Fahrzeugbetrieb drucklos gehalten ist, können die benötigten Hydraulikbauteile relativ zu den anderen Bauteilen des Getriebes klein dimensioniert werden.

Um zu vermeiden, daß beim Aufbau eines Druckes in dem abgeschlossenen Kreislauf Öl in die Steuerdruckleitungen des Getriebes abfließt, kann das Ölvolumen der Hilfslöseeinrichtung über Dichtungen von den Steuerdruckleitungen des Getriebes getrennt sein.

Durch das Vorsehen derartiger Dichtungen wird vermieden, daß Öl von dem abgeschlossenen Ölvolumen in die Steuerdruckleitungen eindringen kann und sich somit das Ölvolumen innerhalb der Hilfslöseeinrichtung verringert, was eventuell zu einem Versagen der Hilfslöseeinrichtung führen kann.

Des weiteren wird durch die Dichtungen auch vermieden, daß Öl aus den unter hohem Druck stehenden Steuerleitungen des Getriebes in das abgeschlossene Ölvolumen fließt und somit die Hilfslöseeinrichtung ungewollt betätigt wird.

Der Fahrer des Fahrzeuges könnte eine derartige ungewollte Betätigung nicht verhindern, so daß hierdurch eine unfallträchtige Fahrsituation herbeigeführt werden könnte.

Um eine einfache Betätigung der Antriebsvorrichtung vorzusehen, kann der Speicherkolben handbetätigbar sein.

Somit sind keinerlei zusätzliche Vorrichtungen oder Antriebe zum Betätigen der Hilfslöseeinrichtung notwendig und die Hilfslöseeinrichtung kann bei Bedarf jederzeit und von jedermann einfach und leicht betätigt werden.

Die Handbetätigung des Speicherkolbens kann dabei so vorgesehen sein, daß der Speicherkolben über ein Gewinde axial verschiebbar ist.

Da ein Gewinde so ausgelegt werden kann, daß Selbsthemmung beim Drehen der Schraube oder des Bolzens auftritt, kann somit auf einfache und kostengünstige Weise eine mit geringem Kraftaufwand verbundene Betätigung des Speicherkolbens vorgesehen werden.

Damit es zu keiner Fehlbetätigung der Hilfslöseeinrichtung durch den Bediener kommen kann, kann der Speicherkolben mit einer Wegbegrenzung versehen sein.

Durch das Vorsehen einer derartigen Wegbegrenzung wird gewährleistet, daß der durch den Speicherkolben bzw. durch dessen Verschiebung erzeugte Öldruck innerhalb der Hilfslöseeinrichtung nicht zu sehr ansteigt, was eventuell zu Beschädigungen der Hilfslöseeinrichtung führen könnte.

Eine leichte Bedienbarkeit des Speicherkolbens kann dadurch erreicht werden, daß der Speicherkolben mit einem Sechskantkopf oder einem Innensechskant versehen ist.

An einem Sechskantkopf können Werkzeuge bekannter Art, beispielsweise Rund- oder Gabelschlüssel, angesetzt werden, wobei durch die Länge des Werkzeuges noch ein Hebelarm erreicht wird, so daß der Bediener der Hilfslöseeinrichtung mit einem relativ geringen Kraftaufwand die Hilfslöseeinrichtung betätigen kann.

Sollte kein geeignetes Werkzeug, wie beispielsweise Rund- oder Gabelschlüssel, verfügbar sein, so kann der Sechskantkopf auch mit einer geeigneten Zange umfaßt und betätigt werden.

Nachdem das liegengebliebende Fahrzeug abgeschleppt wurde, wird die Hilfslöseeinrichtung wieder in ihre Ausgangsstellung zurückgesetzt.

In vorteilhafter Weise kann dies auch dadurch erfolgen, daß die Schaltkolben mit Federeinrichtungen versehen sind, die die Schaltkolben in Ausgangs- bzw. Grundposition zurückdrücken.

Durch das Vorsehen der Federeinrichtungen in den Schaltkolben wird gewährleistet, daß die Hilfslöseeinrichtung auf einfache Art und Weise vollständig in ihre Ausgangsposition zurückgesetzt wird.

Um die ganze Antriebsvorrichtung möglichst kompakt ausführen zu können, kann die Hilfslöseeinrichtung im Getriebeblock integriert sein.

Hierdurch werden zusätzliche Verbundungsleitungen zwischen räumlich voneinander getrennten Bauelementen des Antriebes überflüssig, da diese Verbindungsleitungen bereits im Getriebeblock vorgesehen sein können. Ein umständliches "Verschlauchen" bei der Montage der Antriebsvorrichtung kann somit entfallen.

In einer vorteilhaften Ausgestaltung der Erfindung kann ein Ausgleichszylinder vorgesehen sein, der einen mit einer Federeinrichtung vorgespannten Ausgleichskolben enthält und der mit dem Volumen des Speicherkolbens in Verbindung steht.

Durch das Vorsehen eines Ausgleichszylinders mit einer Federeinrichtung kann gewährleistet werden, daß in dem hydraulischen System in der Hilfslöseeinrichtung immer ein gleichbleibender Druck vorherrscht, so daß beispielsweise Druckveränderungen aufgrund von Temperaturschwankungen, die eine Vergrößerung bzw. Verringerung des konstanten Ölvolumens zur Folge haben, jederzeit problemlos ausgeglichen werden können.

Nimmt die Temperatur zu, d. h. das Öl dehnt sich aus, so kann das Differenzvolumen des Öls in den Ausgleichszylinder abfließen, wobei der Ausgleichskolben gegen die Kraft der Federeinrichtung verschoben wird.

Nimmt die Temperatur wieder ab, so wird von der Federeinrichtung das Differenzvolumen wieder dem geschlossenen System zugeführt.

Nachfolgend ist anhand der Zeichnung prinzipmäßig ein Ausführungsbeispiel der vorliegenden Erfindung dargestellt.
Es zeigt:
- Fig. 1: schematisch den Aufbau der Hilfslöseeinrichtung in unbetätigtem Zustand und
- Fig. 2: schematisch den Aufbau der Hilfslöseeinrichtung in betätigtem Zustand.

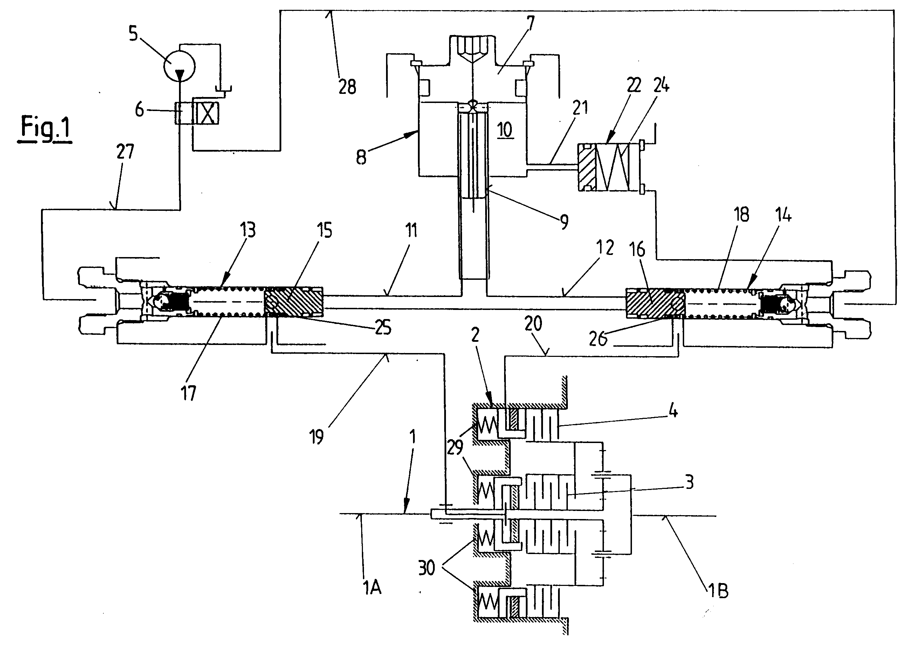

Bezug nehmend auf Fig. 1 ist prinzipmäßig der Aufbau einer Hilfslöseeinrichtung dargestellt.

Die Trennung des Antriebsstranges 1 mit der Antriebsseite 1A und der Abtriebsseite 1B erfolgt auf bekannte Weise mittels einer hydraulisch betätigten Einrichtung.

Die Kupplungseinrichtung 2 des Fahrzeuges weist im wesentlichen eine Reibungskupplung 3 und eine Reibungsbremse 4 auf.

Zwar ist nachfolgend immer wieder von der Reibungskupplung 3 und der Reibungsbremse 4 die Rede, jedoch erfüllt die Reibungsbremse 4 nicht die eigentliche Funktion einer Bremse, sondern stellt vielmehr ebenfalls eine Kupplung dar. Da bei der Reibungsbremse 4 die äußeren Lamellen innerhalb des Kupplungsgehäuses fest angeordnet sind, wird sie jedoch zur besseren Unterscheidung als Reibungsbremse 4 bezeichnet. Im Gegensatz hierzu können sich bei der Reibungskupplung 3 sowohl die inneren als auch die äußeren Lamellen drehen.

Zur Versorgung des gesamten Systems mit Hydraulikflüssigkeit ist eine Pumpe 5 vorgesehen, wobei über ein Magnetventil 6 das Ein- und Auskuppeln der Kupplungseinrichtung 2 gesteuert werden kann.

Das Magnetventil 6 ist hierbei so geschaltet, daß im Falle eines Ausfallens der Pumpe 5, oder ganz allgemein bei einem Druckabfall innerhalb des Rohrleitungssystemes, die Kupplung automatisch eingerückt wird.

Somit ist es nicht möglich, das Fahrzeug abzuschleppen, vielmehr ist hierzu eine Trennung des Antriebsstranges notwendig.

Diese Trennung des Antriebsstranges erfolgt dadurch, daß ein Speicherkolben 7 in einem Speicherzylinder 8 betätigt wird.

Die Betätigung des Speicherkolbens 7 kann dadurch erfolgen, daß einem geeignet profilierten Bauteil auf dem Speicherkolben 7, beispielsweise einem Sechskant oder Innensechskant, ein geeignetes Werkzeug angesetzt wird, so daß der Speicherkolben 7 von Hand betätigt werden kann.

In dem vorliegenden Ausführungsbeispiel ist der Speicherkolben 7 durch ein Gewinde 9 geführt, so daß beim Einwirken eines Drehmomentes auf den Speicherkolben 7 derselbe axial verschoben wird.

Hierdurch verringert sich das Volumen 10 des Speicherzylinders 8 und das darin befindliche Öl wird über Leitungen 11, 12 in zwei Schaltventile 13, 14 gedrückt, wobei in den Schaltventilen 13, 14 angeordnete Schaltkolben 15, 16 durch das einfließende Öl betätigt und gegen die Kraft einer Federeinrichtung, die als Druckfeder 17, 18 ausgeführt ist, verschoben werden.

Das Volumen 10 des Speicherzylinders 8 wird hierbei so weit verringert, daß die Schaltkolben 15, 16 innerhalb der Schaltventile 13, 14 so weit verschoben werden, daß sie die Öffnung von aus den Schaltventilen 13, 14 abzweigenden Leitungen 19, 20 freigeben.

Sind die Öffnungen der Leitungen 19, 20 innerhalb der Schaltventile 13, 14 frei, so besteht eine direkte hydraulische Verbindung zwischen dem Volumen 10 des Speicherzylinders 8 und der Kupplungseinrichtung 2.

Wird der Speicherkolben 7 nun weiter in das Gewinde 9 hineingedreht, so nimmt das Volumen 10 des Speicherzylinders 8 weiter ab. Die hierbei verdrängte Ölmenge kann nun direkt über die Leitungen 11, 12 durch die Schaltventile 13, 14 hindurch und über die Leitungen 19, 20 in die Kupplungseinrichtung 2 strömen und hierbei den Antriebsstrang trennen.

In dem vorliegenden Ausführungsbeispiel ist hierbei vorgesehen, daß von dem Schaltventil 13 die Reibungskupplung 3 und von dem Schaltventil 14 die Reibungsbremse 4 ausgerückt wird. Dieses Ausrücken erfolgt gegen den Widerstand von Druckfedern 29, 30 in der Kupplungseinrichtung 2.

Damit durch eine zu große Verringerung des Volumens 10 des Speicherzylinders 8, d. h. durch eine zu große aus dem Volumen 10 verdrängte Ölmenge, kein zu hoher Druck innerhalb des Hydraulikkreislaufes entsteht, ist der Speicherkolben 10 mit einer Wegbegrenzung versehen.

Der Speicherzylinder 8 ist über eine Verbindungsleitung 21 mit einem Ausgleichszylinder 22 verbunden, der einen Ausgleichskolben 23 enthält, welcher von einer Federeinrichtung, die in dem vorliegenden Ausführungsbeispiel als Druckfeder 24 ausgeführt ist, in einem vorgespannten Zustand gehalten ist.

Der Ausgleichszylinder 22 hat die Aufgabe, bei Temperaturschwankungen dafür zu sorgen, daß das sich in dem geschlossenen Kreislauf befindliche Ölvolumen konstant ist, so daß insbesondere bei höheren Temperaturen, also wenn sich das in dem geschlossenen Kreislauf vorhandene Ölvolumen ausdehnt, eine Fehlbetätigung der Schaltkolben 15, 16 verhindert wird.

Des weiteren sind in den Schaltventilen 13, 14 Dichtungen 25, 26 vorgesehen, die verhindern, daß Öl aus dem geschlossenen Kreislauf in die Steuerdruckleitungen 27, 28 eindringen kann.

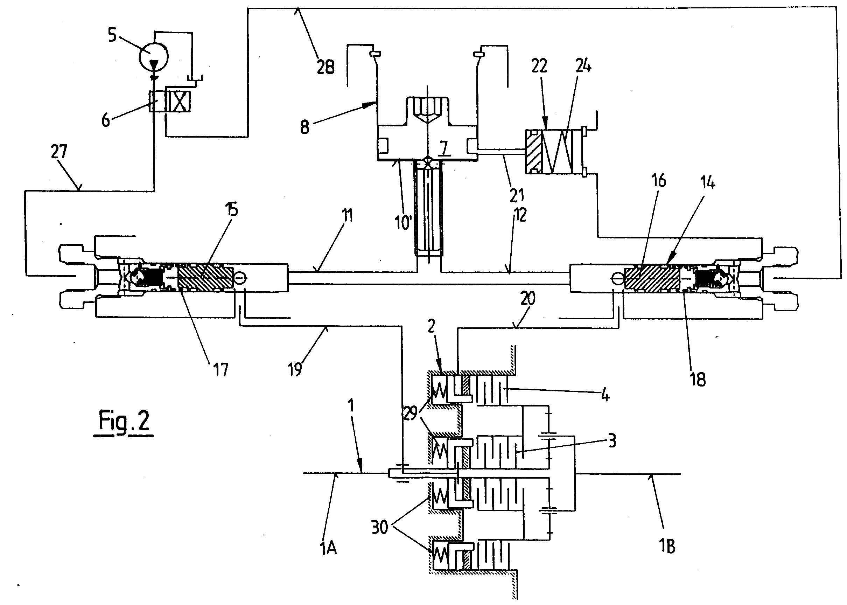

Fig. 2 zeigt das beschriebene hydraulische System in betätigtem Zustand. Der Speicherkolben 7 im Speicherzylinder 8 ist hierbei soweit wie möglich in das Gewinde 9 eingeschraubt. Ein weiteres axiales Verschieben wird durch die bereits erwähnte Wegbegrenzung verhindert.

Das Volumen 10 hat sich zu einem neuen Volumen 10' verringert, wobei das aus dem Volumen 10 gepreßte Öl die Schaltkolben 15, 16 in den Schaltventilen 13, 14 verschoben hat, so daß das Öl über die Leitungen 19, 20 in die Kupplungseinrichtung 2 strömen konnte, wobei die Druckfedern 29, 30 in der Kupplungseinrichtung 2 zusammengedrückt wurden.

Soll der normale Fahrbetrieb wieder aufgenommen werden, so ist es selbstverständlich notwendig, die Trennung des Antriebsstranges 1 wieder aufzuheben.

Hierzu wird der Speicherkolben 7 wieder in seine ursprüngliche Position zurückgeschraubt. Hierdurch vergrößert sich auch wieder das Volumen 10 im Speicherzylinder 8. Das Öl kann somit wieder in das Volumen 10 zurückfließen und die Reibungskupplung 3 und die Reibungsbremse 4 sind wieder eingerückt. Dieses Zurückfließen erfolgt aufgrund der Entspannung der vorgespannten Druckfedern 29, 30 in der Kupplungseinrichtung 2, die immer ein automatisches Einrücken der Kupplungseinrichtung 2 bewirken, falls der Öldruck innerhalb des geschlossenen Hydraulikkreislaufes abfallen sollte, d. h. auch beispielsweise bei einem Leck im Hydraulikkreislauf.

Die vorgespannten Druckfedern 17, 18 in den Schaltventilen 13, 14 bewegen hierbei die Schaltkolben 15, 16 ebenfalls wieder in ihre ursprüngliche Stellung, so daß auch das in den Schaltventilen 13, 14 vorhandene Ölvolumen wieder in den Speicherzylinder 8 strömt.

Der beschriebene geschlossene Ölkreislauf wird einmal mit Lebensdaueröl befüllt und entlüftet. Wird die Hilfslöseeinrichtung nicht betätigt, so unterliegen sämtliche Dichtungen innerhalb des Kreislaufes nur statischer Belastung und haben daher keinen Verschleiß.

Da, wie bereits beschrieben, bei einer Betätigung der Hilfslöseeinrichtung sowohl die Reibungskupplung 3 als auch die Reibungsbremse 4 ausgerückt werden, kann auch bei einer unbeabsichtigten Betätigung des Antriebes keine Leistungsübertragung erfolgen, so daß das Fahrzeug nicht ungewollt bewegt werden kann.

Als Schaltventile 13, 14 werden abgeänderte bekannte Drosselrückschlagventile verwendet, wobei die Bohrung der Drosselstelle und das Gehäuse des Drosselrückschlagventiles entsprechend verlängert worden und am anderen Ende des Drosselrückschlagventiles die Schaltkolben 15, 16 vorgesehen sind. Dazwischen sind Druckfedern 17, 18 vorgesehen, welche dafür sorgen, daß nach dem Zurückdrücken des Ölvolumens aus den Leitungen 19, 20 das Öl über die Leitungen 11, 12 in das Volumen 10 gedrückt wird.

### Bezugszeichen

- 1: Antriebsstrang
- 2: Kupplungseinrichtung
- 3: Reibungskupplung
- 4: Reibungsbremse
- 5: Pumpe
- 6: Magnetventil
- 7: Speicherkolben
- 8: Speicherzylinder
- 9: Gewinde
- 10: Volumen des Zylinders
- 11: Leitung
- 12: Leitung
- 13: Schaltventile
- 14: Schaltventile
- 15: Schaltkolben
- 16: Schaltkolben
- 17: Druckfeder
- 18: Druckfeder
- 19: Leitung
- 20: Leitung
- 21: Verbindungsleitung
- 22: Ausgleichszylinder
- 23: Ausgleichskolben
- 24: Druckfeder
- 25: Dichtung
- 26: Dichtung
- 27: Steuerdruckleitung
- 28: Steuerdruckleitung
- 29: Druckfedern
- 30: Druckfedern

## Patentansprüche

1. Getriebe, insbesondere Zweigang-Getriebe, mit zwei Reibungskupplungen (3, 4), deren Reibelemente durch Federkraft geschlossen und durch Öldruck geöffnet werden, mit Leitungen (19, 20 und 27, 28), die zu Druckräumen der Reibungskupplungen (3, 4) führen, und in die Schaltventile (13, 14) eingeschaltet sind, wobei die Reibungskupplungen im geschlossenen Zustand die Funktion einer Feststellbremse erfüllen, dadurch **gekennzeichnet,** daß die Schaltventile Schaltkolben (15, 16) aufweisen und über Leitungen (11, 12) mit einer Hilfslöseeinrichtung verbunden sind, die einen verstellbaren Speicherkolben (7) aufweist, bei dessen Betätigung die Schaltkolben verschoben werden, so daß die Leitungen (19, 20) mit den Leitungen (11, 12) verbunden sind, so daß das in der Hilfslöseeinrichtung gespeicherte Ölvolumen durch den Speicherkolben (7) den Reibungskupplungen (3, 4) im Sinne einer Trennung zugeführt wird.

2. Antriebsvorrichtung nach Anspruch 1, dadurch **gekennzeichnet,** daß die Hilfslöseeinrichtung mit einem abgeschlossenen Ölvolumen versehen ist, das im normalen Fahrzeugbetrieb drucklos gehalten ist.

3. Antriebsvorrichtung nach Anspruch 1 oder 2, dadurch **gekennzeichnet,** daß das Ölvolumen der Hilfslöseeinrichtung über Dichtungen (25, 26) von den Steuerdruckleitungen (27, 28) des Getriebes getrennt ist.

4. Antriebsvorrichtung nach einem der Ansprüche 1 bis 3, dadurch **gekennzeichnet,** daß die Dichtungen (25, 26) auf den Schaltkolben vorgesehen sind.

5. Antriebsvorrichtung nach einem der Ansprüche 1 bis 4, dadurch **gekennzeichnet,** daß der Speicherkolben (7) handbetätigbar ist.

6. Antriebsvorrichtung nach Anpruch 5, dadurch **gekennzeichnet,** daß der Speicherkolben (7) über ein Gewinde (9) axial verschiebbar ist.

7. Antriebsvorrichtung nach Anspruch 6, dadurch **gekennzeichnet,** daß der Speicherkolben (7) mit einem Sechskantkopf oder einem Innensechskant versehen ist.

8. Antriebsvorrichtung nach einem der Ansprüche 1 bis 7, dadurch **gekennzeichnet,** daß der Speicherkolben (7) mit einer Wegbegrenzung versehen ist.

9. Antriebsvorrichtung nach einem der Ansprüche 1 bis 8, dadurch **gekennzeichnet,** daß die Schaltkolben (15, 16) mit Federeinrichtungen (17, 18) versehen sind, die die Schaltkolben (15, 16) in Ausgangs- bzw. Grundposition zurückdrücken.

10. Antriebsvorrichtung nach einem der Ansprüche 1 bis 9, dadurch **gekennzeichnet,** daß die Hilfslöseeinrichtung im Getriebeblock integriert ist.

11. Antriebsvorrichtung nach einem der Ansprüche 1 bis 10, dadurch **gekennzeichnet,** daß ein Ausgleichszylinder (22) vorgesehen ist, der einen mit einer Federeinrichtung (24) vorgespannten Ausgleichskolben (23) enthält und der mit dem Volumen des Speicherkolbens (7) in Verbindung steht.

## Claims

1. Gearing, more particularly two-speed gearing, with two friction clutches (3, 4), whose friction elements are closed by spring force and are opened by oil pressure, with control lines (19, 20 and 27, 28), which lead to pressure chambers of the friction clutches (3, 4) and in which switching valves (13, 14) are connected, the friction clutches fulfilling the function of a parking brake in the closed state, characterised in that the switching valves comprise switching pistons (15, 16) and are connected via control lines (11, 12) to an auxiliary uncoupling device, which comprises an adjustable accumulator piston (7), with the actuation of which the switching pistons are displaced, so that the control lines (19, 20) are connected to the control lines (11, 12), so that the volume of oil stored in the auxiliary uncoupling device is supplied through the accumulator piston (7) to the friction clutches (3, 4) in order to uncouple them.

2. Driving device according to claim 1, characterised in that the auxiliary uncoupling device is provided with a closed volume of oil, which is held in a pressure-free state during normal vehicle operation.

3. Driving device according to claim 1 or 2, characterised in that the volume of oil of the auxiliary uncoupling device is separated via seals (25, 26) from the control pressure lines (27, 28) of the gearing.

4. Driving device according to one of claims 1 to 3, characterized in that the seals (25, 26) are provided on the switching pistons.

5. Driving device according to one of claims 1 to 4, characterized in that the accumulator piston (7) can be manually operated.

6. Driving device according to claim 5, characterised in that the accumulator piston (7) is axially displaceable via a thread (9).

7. Driving device according to claim 6, characterised in that the accumulator piston (7) is provided with a hexagonal head or an internal hexagon.

8. Driving device according to one of claims 1 to 7, characterised in that the accumulator piston (7) is provided with a path limiter.

9. Driving device according to one of claims 1 to 8, characterised in that the switching pistons (15, 16) are provided with spring devices (17, 18), which push the switching pistons (15, 16) back into a starting or neutral position.

10. Driving device according to one of claims 1 to 9, characterised in that the auxiliary uncoupling device is integrated in the gearing block.

11. Driving device according to one of claims 1 to 10, characterised in that a compensating cylinder (22) is provided, which comprises a compensating piston (23) prestressed by a spring device (24) and communicates with the volume of the accumulator piston (7).

## Revendications

1. Boîte de vitesses, en particulier boîte à deux vitesses, comportant deux embrayages à friction (3, 4) dont les éléments de friction sont amenés en position de fermeture par la force de ressorts et en position d'ouverture par la pression hydraulique, des conduits (19, 20 et 27, 28) qui sont raccordés à des chambres de pression des embrayages à friction (3, 4), et dans lesquels sont montées des soupapes de commande (13, 14), dans laquelle les embrayages à friction ont une fonction de frein de stationnement, **caractérisée** en ce que les soupapes de commande comportent des pistons de commande (15, 16) et sont connectées avec un dispositif de libération assistée par l'intermédiaire de conduits (11, 12) comportant un piston de stockage réglable (7) dont l'activation entraîne le déplacement des pistons de commande, de manière à relier les conduits (19, 20) et les conduits (11, 12), de sorte que les volumes stockés dans le dispositif de libération assistée (7) sont dirigés vers les embrayages à friction (3, 4) en vue d'une séparation.

2. Boîte de vitesses selon la revendication 1, **caractérisée** en ce que le dispositif de libération assistée est pourvu d'une réserve de fluide hydraulique constant, qui est maintenu sans pression, en conduite normale du véhicule.

3. Boîte de vitesses selon la revendication 1 ou 2, **caractérisée** en ce que la réserve d'huile hydraulique du dispositif de libération assistée est séparée des conduits de fluide hydraulique de commande (27, 28) de la boîte de vitesses par des joints (25, 26).

4. Boîte de vitesse selon l'une des revendications 1 à 3, **caractérisée** en ce que les joints (25, 26) sont montés sur les pistons de commande.

5. Boîte de vitesses selon l'une des revendications 1 à 4, **caractérisée** en ce que le piston de stockage (7) est actionné manuellement.

6. Boîte de vitesses selon la revendication 5, **caractérisée** en ce que le piston de stockage (7) est mobile axialement sur un filetage (9).

7. Boîte de vitesses selon la revendication 6, **caractérisée** en ce que le piston de stockage (7) est pourvu d'une tête à six pans ou d'une tête du type Imbus.

8. Boîte de vitesses selon l'une des revendications 1 à 7, **caractérisée** en ce que le piston de stockage (7) est équipé d'un dispositif de fin de course.

9. Boîte de vitesses selon l'une des revendications 1 à 8, **caractérisée** en ce que les pistons de commande (15, 16) sont pourvus de dispositifs à ressorts (17, 18) qui sollicitent les pistons de commande (15, 16) vers leur position de sortie, respectivement leur position de base.

10. Boîte de vitesses selon l'une des revendications 1 à 9 **caractérisée** en ce que le dispositif de libération assistée est intégrée au bloc de la boîte de vitesses,

11. Boîte de vitesses selon l'une des revendications 1 à 10, **caractérisée** en ce qu'elle comporte un vérin de compensation (22) qui est équipé d'un piston de compensation (23) précontraint par un dispositif à ressort (24) et qui est connecté à la réserve de fluide hydraulique du piston de stockage (7).
